# FASCICULE DE BREVET EUROPEEN

(11) **EP 2 304 522 B1**
(45) Date de publication et mention de la délivrance du brevet: **14.09.2016**
(21) Numéro de dépôt: 09800049.0
(22) Date de dépôt: 21.07.2009
(51) Int. Cl.: G06F 3/01, G06F 3/033, G06F 3/0354

(54) **PROCÉDÉ DE COMMANDE À RETOUR HAPTIQUE**
VERFAHREN ZUR HAPTISCHEN FEEDBACK-STEUERUNG
METHOD FOR HAPTIC FEEDBACK CONTROL

(30) Priorité: 21.07.2008 FR 0804132
(43) Date de publication de la demande: 06.04.2011
(73) Titulaire: DAV, 94000 Creteil (FR)
(72) Inventeur: DROUIN, Xavier, F-74106 Annemasse (FR); LAURENT, Patrice, F-74106 Annemasse (FR); TISSOT, Jean-Marc, F-74106 Annemasse (FR)
(74) Mandataire: Pothmann, Karsten
(86) Numéro de dépôt international: PCT/EP2009/059383
(87) Numéro de publication internationale: WO 2010/010098

(56) Documents cités:
- US-A1- 2005 017 947
- US-A1- 2005 184 967
- US-A1- 2005 243 072

## Description

La présente invention concerne un procédé de commande à retour haptique pour un dispositif de commande comportant une plaque de support apte à transmettre un retour haptique, tel qu'une vibration, à un utilisateur par exemple après la modification ou la sélection d'une commande.

On connaît déjà des dispositifs de commande à retour haptique comportant des vibreurs (tels que des vibreurs de type « voice coil » en anglais) dans lesquels un aimant coulisse à l'intérieur d'une bobine ou une bobine coulisse autour d'un aimant pour transmettre une vibration à une surface tactile du dispositif.

On connaît également d'autres dispositifs de commande, comportant un actionneur dans lequel un induit coulisse entre deux bobines. L'alimentation alternée des bobines permet d'attirer l'induit vers l'une ou l'autre des bobines, créant ainsi un effet oscillant vibratoire.

Les actionneurs sont reliés à la plaque pour générer un retour haptique dans une zone de déplacement du doigt d'un utilisateur en fonction de la détection d'une commande.

Le document US 2005/0017947 décrit, à titre d'exemple, un tel dispositif.

Toutefois, il peut arriver que le doigt suive une trajectoire de commande pour laquelle la vibration est peu ou mal ressentie par l'utilisateur.

Le but de la présente invention est donc de proposer un procédé de commande à retour haptique qui ne présente pas les inconvénients de l'état de la technique.

A cet effet, l'invention a pour objet un procédé de commande à retour haptique pour un dispositif de commande pour transmettre un retour haptique à un doigt d'un utilisateur dans une zone de déplacement dudit doigt, ledit dispositif de commande comprenant :
- une plaque de support pour transmettre un retour haptique à un doigt d'un utilisateur dans une zone de déplacement dudit doigt,
- un capteur de déplacement dudit doigt dans ladite zone,
- un premier et un deuxième actionneurs reliés à ladite plaque pour générer le retour haptique dans ladite zone en fonction d'un signal issu dudit capteur, le premier actionneur étant apte à entraîner ladite plaque dans une première direction d'entraînement et le deuxième actionneur est apte à entraîner ladite plaque dans une deuxième direction d'entraînement, sensiblement perpendiculaire à la première direction,
lesdites première et deuxième directions étant coplanaires audit capteur,
- une unité de traitement reliée audit capteur pour déterminer la direction d'un déplacement élémentaire dudit doigt à partir des signaux issus dudit capteur, l'unité de traitement étant configurée pour piloter indépendamment le premier actionneur et le deuxième actionneur en fonction des composantes dudit déplacement élémentaire selon la première et la deuxième direction d'entraînement,
ledit procédé de commande comportant une première étape dans laquelle on détermine la direction d'un déplacement élémentaire dudit doigt et on décompose le déplacement élémentaire en composantes selon ladite première et deuxième direction d'entraînement, et une deuxième étape dans laquelle on pilote indépendamment ledit premier actionneur et ledit deuxième actionneur en fonction des composantes dudit déplacement élémentaire pour entraîner ladite plaque en translation de manière que la résultante de l'effet vibratoire généré par lesdits actionneurs soit ressentie par ledit doigt selon une direction, caractérisé en ce que ladite direction de la résultante de l'effet vibratoire est sensiblement perpendiculaire à la direction dudit déplacement élémentaire.

Ainsi, la plaque est entraînée en translation de sorte que le ressenti haptique perçu par l'utilisateur soit amélioré et que, quelque soit la trajectoire du doigt, l'utilisateur perçoive l'effet vibratoire. De même, la vitesse de déplacement du doigt n'a plus d'impact sur le ressenti. En effet, l'effet haptique généré n'est plus principalement basé sur la fréquence de vibration générée mais également sur d'autres paramètres tels que la direction ou la vitesse de déplacement de la plaque dans un sens plutôt que dans l'autre. L'effet haptique ne dépend donc plus uniquement de la fréquence de la vibration générée qui pouvait être moins bien perçue lorsqu'elle était voisine de celle de la trajectoire du doigt de l'utilisateur.

Selon une caractéristique du procédé de commande, au cours de la deuxième étape, on module un paramètre de commande des actionneurs proportionnellement aux composantes du déplacement élémentaire dudit doigt.

D'autres avantages et caractéristiques apparaîtront à la lecture de la description de l'invention, ainsi que des dessins annexés sur lesquels :
- la figure 1 est une vue schématique d'un dispositif de commande selon un premier mode de réalisation,
- la figure 2 est un graphique représentant des signaux de commande en fonction du temps pour des actionneurs du dispositif de la figure 1,
- les figures 3a et 3b sont des vues schématiques d'un dispositif de commande réalisé selon un deuxième mode de réalisation,
- les figures 4a, 4b et 4c sont des graphiques représentant des signaux de commande en fonction du temps pour des actionneurs du dispositif des figures 3a et 3b et,
- la figure 5 est un organigramme illustrant un procédé de commande d'un dispositif de commande.

Sur ces figures, les éléments identiques portent les mêmes numéros de référence. Par souci de clarté, les étapes du procédé de commande sont numérotées à partir de 100.

L'invention concerne un dispositif de commande à retour haptique, par exemple pour un tableau de commande de véhicule automobile, pour une dalle tactile ou encore pour un écran tactile, pouvant transmettre un retour haptique à un utilisateur ayant par exemple modifié ou sélectionné une commande.

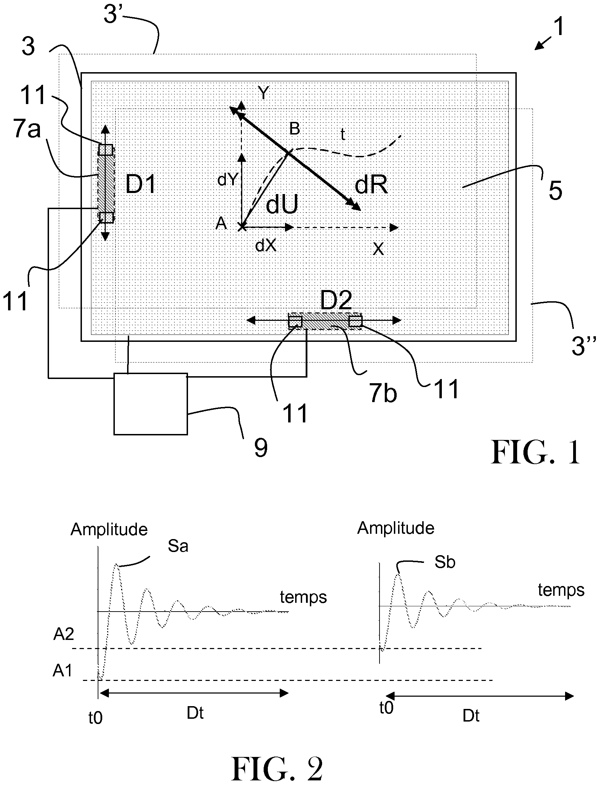

Comme représenté sur la figure 1, le dispositif 1 comporte une plaque de support 3 pour transmettre un retour haptique à un doigt d'un utilisateur dans une zone de déplacement du doigt, un capteur de déplacement 5 du doigt dans la zone et un premier et un deuxième actionneurs 7a, 7b, reliés à la plaque 3, pour générer le retour haptique dans la zone en fonction d'un signal issu du capteur 5.

Le retour haptique est par exemple une vibration produite par un signal de commande sinusoïdal ou par un signal de commande comportant un ou une succession de pulses.

Dans l'exemple de la figure 1, le dispositif 1 comporte deux actionneurs 7a, 7b représentés en pointillés sous la plaque de support 3.

Chaque actionneur 7a, 7b comporte une partie fixe et une partie mobile en translation dans un entrefer de la partie fixe par exemple de l'ordre de 200µm, entre une première et une deuxième position, parallèlement à un axe longitudinal de la partie mobile. La partie mobile est par exemple formée par un aimant mobile coulissant à l'intérieur d'une bobine fixe ou par une bobine mobile coulissant autour d'un aimant fixe, la partie mobile et la partie fixe coopérant par effet électromagnétique.

Les parties mobiles sont reliées à la plaque 3 de manière que le mouvement des parties mobiles engendre le mouvement en translation de la plaque 3 pour générer le retour haptique au doigt de l'utilisateur dans la zone de déplacement.

Le capteur de déplacement 5 comporte un capteur à surface tactile porté par la plaque de support 3 dans la zone de déplacement du doigt. On prévoit un capteur de pression à surface tactile, tel qu'un capteur de pression à surface tactile de technologie FSR pour « Force Sensing Resistor » en anglais, c'est-à-dire utilisant des résistances sensibles à la pression.

Ces capteurs comprennent des couches semi-conductrices souples prises en sandwich entre par exemple une couche conductrice et une couche résistive. En exerçant une pression ou un glissé sur la couche FSR, sa résistance ohmique diminue permettant ainsi, par application d'une tension électrique adaptée, de mesurer la pression appliquée et / ou la localisation de l'endroit où la pression est exercée.

Selon une conception différente de la technologie FSR, le capteur tactile comprend deux feuilles souples de support espacées l'une de l'autre par des entretoises élastiques et portant sur des faces mutuellement en regard des éléments permettant de réaliser un contact électrique lors de la compression du capteur.

Le dispositif 1 comporte en outre une unité de traitement 9 reliée au capteur 5 pour déterminer, en temps réel, la direction d'un déplacement élémentaire dU du doigt à partir des signaux issus du capteur 5. La direction du déplacement élémentaire dU est par exemple déduite de deux informations successives de positions issues du capteur de déplacement 5.

Le premier actionneur 7a est apte à entraîner la plaque 3 dans une première direction d'entraînement D1, le deuxième actionneur 7b est apte à entraîner la plaque 3 dans une deuxième direction d'entraînement D2 et l'unité de traitement 9 est configurée pour piloter indépendamment le premier actionneur 7a et le deuxième actionneur 7b en fonction des composantes dX, dY du déplacement élémentaire dU selon la première D1 et la deuxième direction d'entraînement D2.

Selon un mode de réalisation, l'unité de traitement 9 est configurée pour moduler au moins un paramètre de commande des actionneurs 7a, 7b.

Le pilotage des actionneurs 7a, 7b relativement aux composantes dX, dY, réalisé par la modulation d'un paramètre de commande des actionneurs 7a, 7b, permet de générer un effet haptique ressenti dans une direction de propagation dR dépendante de la trajectoire t réalisée par le doigt de commande.

Le paramètre de commande est un signal de commande de l'actionneur, par exemple l'amplitude du courant d'alimentation appliqué aux bornes des actionneurs 7a, 7b.

Les actionneurs 7a et 7b sont donc moteurs respectivement dans les directions d'entraînement D1 et D2. Toutefois, pour permettre le déplacement de la plaque 3, les moyens de liaison 11 entre la plaque 3 et les actionneurs 7a et 7b sont prévus déformables de manière à autoriser un déplacement de la plaque 3 relativement aux actionneurs 7a, 7b dans les directions non motrices. Les moyens de liaison sont par exemple réalisés en matière plastique.

Ainsi, le premier actionneur 7a est moteur dans la direction D1 et la liaison 11 entre la plaque 3 et la partie mobile du premier actionneur 7a est déformable notamment dans la direction D2. De même, le deuxième actionneur 7b est moteur dans la direction D2 et la liaison 11 entre la plaque 3 et la partie mobile du deuxième actionneur 7b est déformable notamment dans la direction D1.

L'unité de traitement 9 est configurée pour moduler au moins un paramètre de commande des actionneurs 7a, 7b de manière que la résultante de l'effet vibratoire généré par lesdits actionneurs 7a, 7b soit ressentie par le doigt selon une direction dR sensiblement perpendiculaire et coplanaire à la direction du déplacement élémentaire dU.

Ainsi, la plaque 3 est entraînée en translation selon une direction perpendiculaire et coplanaire au déplacement du doigt de sorte que le ressenti haptique perçu par l'utilisateur soit amélioré et que, quelque soit la trajectoire du doigt, l'utilisateur perçoive l'effet vibratoire. De même, la vitesse de déplacement du doigt n'a plus d'impact sur le ressenti. En effet, l'effet haptique généré n'est plus principalement basé sur la fréquence de vibration générée mais également sur d'autres paramètres tels que la direction ou la vitesse de déplacement de la plaque 3 dans un sens plutôt que dans l'autre. L'effet haptique ne dépend donc plus uniquement de la fréquence de la vibration générée qui pouvait être moins bien perçue lorsqu'elle était voisine de celle de la trajectoire du doigt de l'utilisateur.

Le premier actionneur 7a est configuré pour entraîner la plaque 3 en translation dans la première direction d'entraînement D1 et le deuxième actionneur 7b est configuré pour entraîner la plaque 3 en translation dans la deuxième direction d'entraînement D2 perpendiculaire et coplanaire à la première direction D1. Pour cela, les parties mobiles sont fixées selon des directions d'entraînement D1, D2 de la plaque 3 sensiblement orthogonales et coplanaires au capteur 5.

Les actionneurs 7a et 7b sont donc moteurs respectivement dans les directions d'entraînement D1 et D2 orthogonales et les moyens de liaison 11 entre la plaque 3 et les actionneurs 7a et 7b autorisent un déplacement dans les autres directions.

On distingue sur la figure 1, un exemple de trajectoire t du doigt d'un utilisateur dans une zone de déplacement du dispositif 1.

On détermine la direction d'un déplacement élémentaire dU du doigt entre les points A et B sur la trajectoire t du doigt, à partir des signaux issus du capteur 5.

Le déplacement élémentaire dU du doigt est décomposé en une composante dX et une composante dY selon les deux axes X et Y du repère orthogonal formé par les directions d'entraînement D1 et D2 des actionneurs 7a et 7b.

L'unité de traitement 9 module par exemple de façon proportionnelle l'amplitude de l'intensité des signaux de commande Sa et Sb des actionneurs 7a, 7b en fonction des composantes dX et dY du déplacement élémentaire dU (figure 2).

Dans cet exemple, on applique des signaux de commande périodiques, amortis et en phase à partir du temps initial t0 aux deux actionneurs 7a, 7b, de manière à générer un effet haptique ponctuel. Un effet haptique ponctuel peut être généré lorsque par exemple, le doigt de l'utilisateur change de sélection dans un menu de commande déroulant.

Puis, pour chaque instant d'une durée prédéfinie d'application Dt, le signal de commande Sa de l'actionneur 7a possède une intensité d'amplitude plus importante que pour le signal de commande Sb de l'actionneur 7b, la composante dY selon la direction d'entraînement D1 de l'actionneur 7a étant plus importante que la composante dX selon la direction d'entraînement D2 de l'actionneur 7b.

Dans d'autres cas non représentés pour lesquels le déplacement élémentaire est sensiblement parallèle à un axe X ou Y, les signaux de commande sont modulés par l'unité de traitement 9 de manière que l'actionneur apte à entraîner la plaque en translation selon la direction perpendiculaire et coplanaire au déplacement élémentaire, possède une intensité d'amplitude quasiment maximale.

En même temps, l'autre actionneur, apte à entraîner la plaque 3 en translation selon une direction parallèle au déplacement élémentaire, possède alors une intensité quasiment nulle.

La résultante de l'effet vibratoire généré par les actionneurs 7a, 7b est alors privilégiement ressentie par le doigt selon une direction de propagation dR (représentée par une double flèche sur la figure 1), c'est-à-dire perpendiculairement à la direction du déplacement élémentaire dU.

Pour une meilleure compréhension on a représenté en pointillés et de façon exagérée, deux positions 3' et 3" déplacées de quelques centaines de micromètres, de la plaque 3 en translation selon la direction de propagation dR perpendiculaire à la trajectoire t.

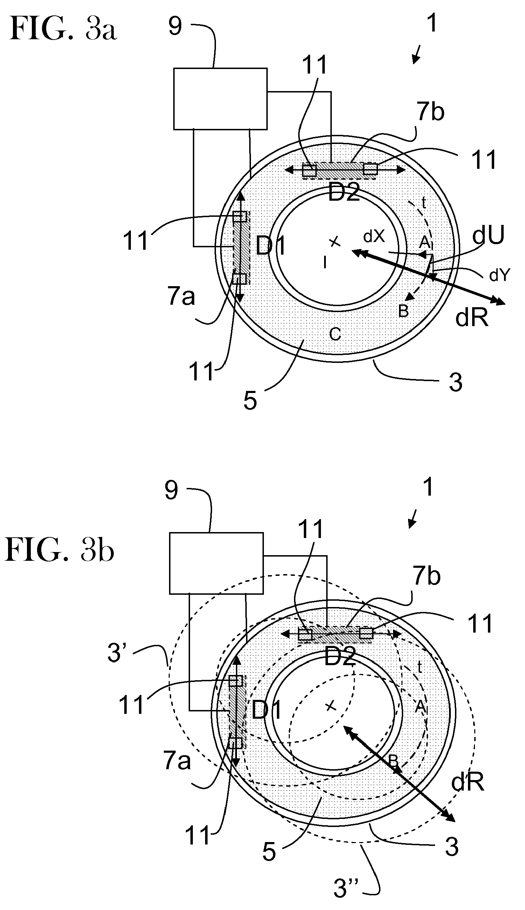

Selon un autre mode de réalisation représenté sur les figures 3a et 3b, la zone de déplacement présente une forme annulaire, de centre I.

De la même façon, le déplacement élémentaire dU du doigt est décomposé en une composante dX et une composante dY selon les deux axes X et Y du repère orthogonal formé par les directions de déplacement D1 et D2 des actionneurs 7a et 7b.

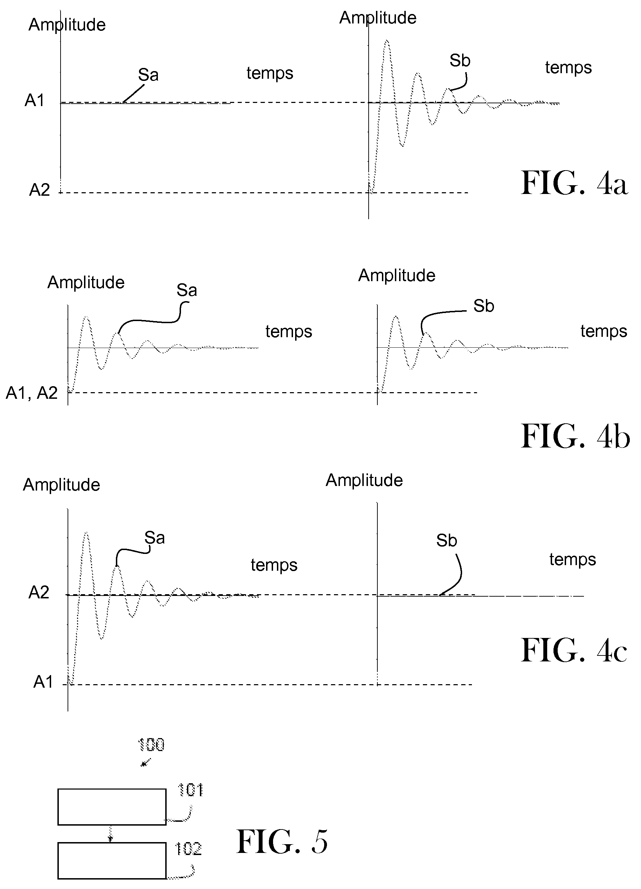

Dans cet exemple, on applique des signaux de commande Sa, Sb périodiques, amortis et en phase à partir du temps initial t0 aux deux actionneurs 7a, 7b (figures 4a, 4b, 4c).

Lorsque le doigt de l'utilisateur est au point A dans la zone de déplacement (figure 3a), le déplacement élémentaire dU est pratiquement parallèle à la direction d'entraînement D1 du premier actionneur 7a.

Le signal de commande Sa du deuxième actionneur 7b possède alors une amplitude A2 quasiment maximale tandis que le premier actionneur 7a, possède une amplitude A1 quasiment nulle (figure 4a).

Puis, lorsque le doigt de l'utilisateur est au point B dans la zone de déplacement (figure 3a), le déplacement élémentaire dU possède une composante dX et une composante dY quasiment égales. Les signaux de commande Sa, Sb des actionneurs 7a et 7b possèdent alors des amplitudes A1, A2 quasiment égales (figure 4b).

On a illustré sur la figure 3b de façon exagérée et en pointillé les plaques 3' et 3" déplacées selon la direction de propagation radiale dR de l'effet haptique correspondant à la trajectoire t parcourue par le doigt de l'utilisateur, au point B. On constate les plaques déplacées 3', 3" sont décentrées par rapport au centre I de la plaque 3 en position de repos.

Enfin, lorsque le doigt de l'utilisateur est au point C dans la zone de déplacement (figure 3a), le déplacement élémentaire dU est pratiquement parallèle à la direction D2 d'entraînement du deuxième actionneur 7b.

Le signal de commande Sa du deuxième actionneur 7b possède alors une amplitude A2 quasiment nulle tandis que le premier actionneur 7a, possède une amplitude A1 quasiment maximale (figure 4c).

La résultante de l'effet vibratoire généré par les actionneurs 7a, 7b est alors ressentie par le doigt de façon selon une direction dR radiale, sensiblement perpendiculaire à la direction du déplacement élémentaire dU.

On peut ainsi simuler une molette mécanique par une surface plane générant un retour haptique pour par exemple informer un utilisateur d'un changement de commande ou de la sélection d'une commande dans un menu déroulant, par exemple pour informer l'utilisateur d'un changement de la température par un retour haptique tactile.

La figure 5 représente un organigramme du procédé de commande à retour haptique 100 comportant un dispositif de commande 1 pour la mise en oeuvre successive d'une première étape 101 et d'une deuxième étape 102.

Dans la première étape 101, on détermine la direction d'un déplacement élémentaire dU du doigt et on décompose le déplacement élémentaire dU en composantes dX, dY selon une première et une deuxième direction d'entraînement D1, D2.

Puis, dans la deuxième étape 102, on pilote indépendamment le premier actionneur 7a et le deuxième actionneur 7b en fonction des composantes dX, dY dudit déplacement élémentaire dU.

On module un paramètre des signaux de commande des actionneurs 7a, 7b proportionnellement aux composantes dX, dY du déplacement élémentaire dU dudit doigt.

On module par exemple un paramètre des signaux de commande des actionneurs 7a, 7b en fonction des composantes dX, dY du déplacement élémentaire dU, de manière que la résultante de l'effet vibratoire généré par les actionneurs 7a, 7b soit ressentie par le doigt selon une direction dR sensiblement perpendiculaire à la direction du déplacement élémentaire dU.

On profite de la durée d'application Dt des signaux S1 et S2, pour réitérer la première étape 101 de la détermination du déplacement élémentaire dU suivant.

Puis, on réitère les étapes 101, 102, pour le déplacement élémentaire suivant, jusqu'à ce que le capteur 5 ne détecte plus de déplacement.

On comprend qu'en générant un retour haptique sensiblement perpendiculaire au doigt, l'utilisateur perçoit le retour haptique quelque soit les fréquences de fonctionnement.

## Revendications

1. Procédé de commande à retour haptique pour un dispositif de commande pour transmettre un retour haptique à un doigt d'un utilisateur dans une zone de déplacement dudit doigt, ledit dispositif de commande comprenant :
- une plaque de support (3) pour transmettre un retour haptique à un doigt d'un utilisateur dans une zone de déplacement dudit doigt,
- un capteur de déplacement (5) dudit doigt dans ladite zone,
- un premier et un deuxième actionneurs (7a, 7b) reliés à ladite plaque (3) pour générer le retour haptique dans ladite zone en fonction d'un signal issu dudit capteur (5), le premier actionneur (7a) étant apte à entraîner ladite plaque (3) dans une première direction d'entraînement (D1) et le deuxième actionneur (7b) est apte à entraîner ladite plaque (3) dans une deuxième direction d'entraînement (D2), sensiblement perpendiculaire à la première direction (D1), les dites première et deuxième directions (D1, D2) étant coplanaires ou dit capteur (5),
- une unité de traitement (9) reliée audit capteur (5) pour déterminer la direction d'un déplacement élémentaire (dU) dudit doigt à partir des signaux issus dudit capteur (5), l'unité de traitement (9) étant configurée pour piloter indépendamment le premier actionneur (7a) et le deuxième actionneur (7b) en fonction des composantes (dX, dY) dudit déplacement élémentaire (dU) selon la première (D1) et la deuxième direction d'entraînement (D2),
ledit procédé de comrmande comportant une première étape (101) dans laquelle on détermine la direction d'un déplacement élémentaire dudit doigt et on décompose le déplacement élémentaire en composantes selon ladite première et deuxième direction d'entraînement (D1, D2), et une deuxième étape (102) dans laquelle on pilote indépendamment ledit premier actionneur (7a) et ledit deuxième actionneur (7b) en fonction des composantes dudit déplacement élémentaire (dU) pour entraîner ladite plaque (3) en translation de manière que la résultante de l'effet vibratoire généré par lesdits actionneurs (7a, 7b) soit ressentie par ledit doigt selon une direction (dR), les dites directions de la résultante de l'effet vibratoire (dR) et du déplacement élementaire, ledit procédé étant **caractérisé en ce que** ladite direction de la résultante de l'effet vibratoire (dR) est sensiblement perpendiculaire à la direction dudit déplacement élémentaire (dU).

2. Procédé de commande selon la revendication 1, **caractérisé en ce qu'**au cours de la deuxième étape (102), on module un paramètre de commande des actionneurs (7a , 7b) proportionnellement aux composantes du déplacement élémentaire dudit doigt. (du) étant complanaires audit capteur (5).

## Patentansprüche

1. Steuerverfahren mit haptischer Rückmeldung für eine Steuervorrichtung zur Übertragung einer haptischen Rückmeldung an einen Finger eines Benutzers in einer Bewegungszone des Fingers, wobei die Steuervorrichtung enthält:
- eine Trägerplatte (3) zur Übertragung einer haptischen Rückmeldung an einen Finger eines Benutzers in einer Bewegungszone des Fingers,
- einen Bewegungssensor (5) des Fingers in der Zone,
- ein erstes und ein zweites Betätigungsglied (7a, 7b), die mit der Platte (3) verbunden sind, um die haptische Rückmeldung in der Zone abhängig von einem vom Sensor (5) stammenden Signal zu erzeugen, wobei das erste Betätigungsglied (7a) fähig ist, die Platte (3) in einer ersten Antriebsrichtung (D1) anzutreiben, und das zweite Betätigungsglied (7b) fähig ist, die Platte (3) in einer zweiten Antriebsrichtung (D2) im Wesentlichen lotrecht zur ersten Richtung (D1) anzutreiben, wobei die ersten und zweiten Richtungen (D1, D2) zum Sensor (5) koplanar sind,
- eine mit dem Sensor (5) verbundene Verarbeitungseinheit (9), um die Richtung einer Elementarbewegung (dU) des Fingers ausgehend von den vom Sensor (5) stammenden Signalen zu bestimmen, wobei die Verarbeitungseinheit (9) konfiguriert ist, das erste Betätigungsglied (7a) und das zweite Betätigungsglied (7b) abhängig von den Komponenten (dX, dY) der Elementarbewegung (dU) gemäß der ersten (D1) und der zweiten Antriebsrichtung (D2) unabhängig zu steuern,
wobei das Steuerverfahren einen ersten Schritt, in dem die Richtung einer Elementarbewegung des Fingers bestimmt und die Elementarbewegung in Komponenten gemäß der ersten und der zweiten Antriebsrichtung (D1, D2) zerlegt wird, und einen zweiten Schritt (102) aufweist, in dem das erste Betätigungsglied (7a) und das zweite Betätigungsglied (7b) abhängig von den Komponenten der Elementarbewegung (dU) unabhängig gesteuert werden, um die Platte (3) so translatorisch anzutreiben, dass die Resultierende der von den Betätigungsgliedern (7a, 7b) erzeugten Schwingungswirkung vom Finger gemäß einer Richtung (dR) gefühlt wird, wobei die Richtungen der Resultierenden der Schwingungswirkung (dR) und der Elementarbewegung (dU) zum Sensor (5) koplanar sind, wobei das Verfahren **dadurch gekennzeichnet ist, dass** die Richtung der Resultierenden der Schwingungswirkung (dR) im Wesentlichen lotrecht zur Richtung der Elementarbewegung (dU) ist.

2. Steuerverfahren nach Anspruch 1, **dadurch gekennzeichnet, dass** während des zweiten Schritts (102) ein Steuerparameter der Betätigungsglieder (7a, 7b) proportional zu den Komponenten der Elementarbewegung des Fingers moduliert wird.

## Claims

1. Method for haptic feedback control for a control device for transmitting a haptic feedback to a finger of a user in a zone of movement of said finger, said control device comprising:
- a backing plate (3) for transmitting a haptic feedback to a finger of a user in a zone of movement of said finger,
- a sensor (5) for sensing the movement of said finger in said zone,
- a first and a second actuator (7a, 7b) connected to said plate (3) in order to generate the haptic feedback in said zone as a function of a signal originating from said sensor (5), the first actuator (7a) being capable of driving said plate (3) in a first drive direction (D1) and the second actuator (7b) being capable of driving said plate (3) in a second driving direction (D2), substantially perpendicular to the first direction (D1), said first and second directions (D1, D2) being coplanar with said sensor (5),
- a processing unit (9) connected to said sensor (5) in order to determine the direction of an elementary movement (dU) of said finger based on the signals originating from said sensor (5), the processing unit (9) being configured to control independently the first actuator (7a) and the second actuator (7b) as a function of the components (dX, dY) of said elementary movement (dU) according to the first drive direction (D1) and the second drive direction (D2),
said control method comprising a first step (101) in which the direction of an elementary movement of said finger is determined and the elementary movement is broken down into components according to said first and second drive direction (D1, D2), and a second step (102) in which said first actuator (7a) and said second actuator (7b) are controlled independently as a function of the components of said elementary movement (dU) in order to drive said plate (3) in translation so that the resultant of the vibratory effect generated by said actuators (7a, 7b) is felt by said finger in a direction (dR), said directions of the resultant of the vibratory effect (dR) and of the elementary movement (dU) being coplanar with said sensor (5), said method being **characterized in that** said direction of the resultant of the vibratory effect (dR) is substantially perpendicular to the direction of said elementary movement (dU).

2. Control method according to Claim 1, **characterized in that**, during the second step (102), a parameter of control of the actuators (7a, 7b) is modulated proportionally to the components of the elementary movement of said finger.
